# DEMANDE DE BREVET EUROPEEN

(11) **EP 1 129 892 A1**
(43) Date de publication de la demande: **05.09.2001**
(21) Numéro de dépôt: 01400474.1
(22) Date de dépôt: 22.02.2001
(51) Int. Cl.: B60L 15/20, B60L 11/12

(54) **Dispositif de gestion d'énergie pour véhicule**

(30) Priorité: 01.03.2000 FR 0002654
(71) Demandeur: Renault V.I., 69003 Lyon (FR)
(72) Inventeur: Baudesson, Anne, 69008 Lyon (FR); Dayre, Eric, 38540 Saint Just Chaleyssin (FR)
(74) Mandataire: Srour, Elie

(57) **Abrégé**

Dispositif de gestion d'énergie pour véhicule, comprenant au moins une source d'énergie électrique 1, au moins un moteur électrique de traction 4, des organes auxiliaires 3 consommateurs d'énergie électrique, et un superviseur de gestion d'énergie 5. Le superviseur 5 comprend un moyen pour recevoir et analyser un signal relatif au parcours et/ou à la localisation du véhicule, ledit signal étant émis par un système 6 de navigation et de guidage du véhicule, un moyen d'estimation d'une demande future de puissance du moteur électrique de traction 4, et un moyen pour émettre un signal de commande des organes auxiliaires 3 en fonction de l'estimation de la demande future de façon que la consommation d'énergie en provenance de la source d'énergie électrique 1 soit réduite.

## Description

La présente invention concerne le domaine de la gestion de l'énergie à bord d'un véhicule automobile entraîné par un ou plusieurs moteurs électriques de traction, et d'éléments dits "auxiliaires", également consommateurs d'énergie électrique, par exemple le climatiseur, le chauffage, le compresseur d'air.

L'invention s'applique aux véhicules dits "électriques", dans lesquels le ou les moteurs électriques de traction sont alimentés par au moins un élément de stockage d'énergie, par exemple un accumulateur, éventuellement complété par un supercondensateur.

L'invention s'applique également aux véhicules dits "hybrides" équipés en plus du ou des moteurs électriques de traction, d'un moyen de génération d'énergie électrique tel qu'un moteur thermique couplé à un alternateur, ou une turbine à gaz couplée à un alternateur, ou encore une pile à combustible et équipés, éventuellement, d'un élément de stockage d'énergie.

Il est intéressant de gérer finement l'énergie électrique à bord de ces deux types de véhicules. En effet, les véhicules actuels comportent, de plus en plus, des équipements consommateurs d'énergie électrique, par exemple des systèmes tels que la climatisation et le chauffage.

Les lois de gestion actuelles de l'énergie à bord d'un véhicule hybride consistent, soit à choisir la source d'énergie pour alimenter les auxiliaires, soit à réduire le fonctionnement des auxiliaires en cas de forte demande d'énergie.

Le document US-A-5 924 406 décrit un appareil de commande d'équipement auxiliaire entraîné par un moteur à combustion interne. Il est proposé de réduire la consommation du véhicule en commandant l'équipement auxiliaire en fonction de l'environnement du véhicule. Si la puissance maximale est supérieure à la charge de fonctionnement, l'équipement auxiliaire est entraîné directement par le moteur à combustion interne. L'énergie en surplus est stockée dans un dispositif de stockage d'énergie. Si la puissance maximale est presque égale à la charge de fonctionnement et que la consommation est dégradée lors de l'entraînement de l'équipement auxiliaire, ce dernier peut être entraîné en utilisant l'énergie présente dans le dispositif de stockage. On évite ainsi l'aggravation de la consommation due au fonctionnement des auxiliaires.

La présente invention a pour objet de proposer une gestion de l'énergie visant à réduire la consommation de carburant tout en préservant les performances du véhicule et sans influencer négativement le dimensionnement de la chaîne de traction.

Le dispositif, selon l'invention, est destiné à la gestion d'énergie pour véhicule. Le dispositif comprend au moins une source d'énergie électrique, au moins un moteur électrique de traction, des organes auxiliaires consommateurs d'énergie électrique, et un superviseur de gestion d'énergie. Le superviseur comprend un moyen pour recevoir et analyser un signal relatif au parcours et/ou à la localisation du véhicule, ledit signal étant émis par un système de navigation et de guidage du véhicule, un moyen d'estimation d'une demande future de puissance du moteur électrique de traction, et un moyen pour émettre un signal de commande des organes auxiliaires en fonction de l'estimation de la demande future de façon que la consommation d'énergie en provenance de la source d'énergie électrique soit réduite.

Avantageusement, le dispositif comprend une unité de stockage d'énergie électrique, telle qu'une ou plusieurs batteries identiques ou non et/ou un ou plusieurs supercondensateurs.

Avantageusement, le moteur électrique de traction comprend un moyen pour récupérer de l'énergie lors d'un freinage. L'énergie récupérée peut être consommée par les organes auxiliaires et/ou stockée dans l'unité de stockage.

Dans un mode de réalisation de l'invention, le signal de commande est apte à arrêter les organes auxiliaires.

Dans un mode de réalisation de l'invention, le système de navigation et de guidage est apte à localiser le véhicule.

Dans un mode de réalisation de l'invention, le dispositif comprend une mémoire de stockage de données relatives au parcours du véhicule et de données relatives au véhicule.

Dans un mode de réalisation de l'invention, le dispositif comprend un moteur à combustion interne ou externe. Il s'agit alors d'un véhicule hybride.

Dans autre un mode de réalisation de l'invention, le dispositif comprend une pile à combustible.

Dans un mode de réalisation de l'invention, le dispositif comprend une caméra reliée au superviseur pour fournir audit superviseur des données relatives au parcours et/ou à la localisation du véhicule. La caméra peut servir à repérer des marquages disposés sur la chaussée ou en bordure de chaussée. Les marquages peuvent être prévus uniquement à cet effet ou non.

Dans un mode de réalisation de l'invention, le dispositif comprend un système de positionnement global apte à communiquer avec des stations de positionnement. Les stations de positionnement peuvent être des satellites ou des stations fixes.

L'invention a aussi pour objet un véhicule comprenant un dispositif tel que ci-dessus. Le véhicule est de type voiture particulière, utilitaire léger ou lourd, de transport collectif, notamment urbain du genre autobus, etc.

L'invention s'applique de façon particulièrement avantageuse aux véhicules de transports collectifs effectuant un parcours répétitif, par exemple les autobus ou les cars de ramassage scolaire. On peut alors modéliser de façon fine le parcours d'un véhicule et prévoir le long de ce parcours des marquages servant au repérage dudit véhicule, ces marquages pouvant notamment être de type visuel ou encore de type hertzien. De plus en plus souvent, ces véhicules sont équipés de climatiseurs qui nécessitent une puissance relativement importante supérieure à une dizaine de kW et dont une coupure momentanée n'entraîne pas de hausse de la température trop sensible par les passagers en raison de l'inertie thermique du véhicule et de la différence de température par rapport à l'atmosphère ambiante qui est en général beaucoup plus faible que celle qui est fournie dans le cas de la climatisation d'un véhicule particulier ou d'un immeuble. Mais, la coupure momentanée de la fonction de climatisation à bord d'un véhicule de transport collectif permet une diminution sensible de la puissance demandée dans le but de réduire la puissance totale demandée au moyen de génération électrique, d'où une diminution de la consommation de carburant et un fonctionnement à meilleur rendement, ou à consommation constante un accroissement des performances du véhicule, par exemple en cas de forte montée, ou encore une combinaison de ces deux avantages.

La présente invention sera mieux comprise et d'autres avantages apparaîtront à la lecture de la description détaillée d'un mode de réalisation de l'invention pris à titre d'exemple nullement limitatif et illustré par les dessins annexés, sur lesquels :
- la figure 1 est un schéma fonctionnel d'une chaîne de traction de véhicule;
- la figure 2 montre des courbes de fonctionnement d'un véhicule selon l'art antérieur;
- la figure 3 montre des courbes de fonctionnement d'un véhicule équipé d'un dispositif de gestion conforme à l'invention; et
- la figure 4 montre un exemple de modélisation du parcours.

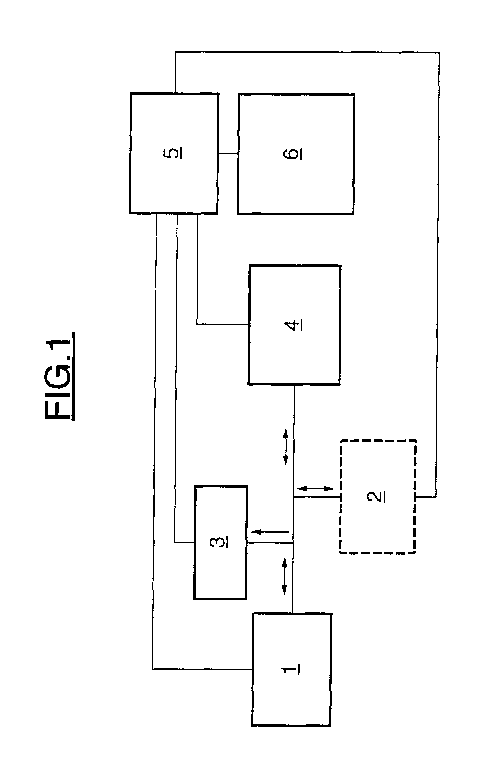

Comme on peut le voir sur la figure 1, le véhicule comprend une source d'énergie 1, par exemple un moteur thermique couplé par un alternateur, une turbine à gaz couplée à un alternateur ou une pile à combustible, éventuellement au moins une unité de stockage 2 telle qu'une batterie, un accumulateur lithium-ion, un supercondensateur ou encore un volant d'inertie, un ensemble d'auxiliaires 3 consommateurs d'énergie électrique et au moins un moteur électrique 4 de traction. Les auxiliaires peuvent comprendre un climatiseur, un chauffage et plus généralement tout type d'organe consommateur d'énergie électrique dont le fonctionnement peut être interrompu pendant une durée limitée sans nuire à la conduite ou à la sécurité du véhicule.

Le moteur électrique de traction 4 est, soit demandeur d'énergie, soit générateur d'énergie en cas de freinage ou de descente avec maintien de la vitesse acquise du véhicule. L'énergie de traction provient, soit de la source d'énergie 1, soit de l'unité de stockage 2 en cas de forte demande d'énergie. L'énergie de freinage est, soit stockée dans l'unité de stockage 2, soit consommée par les auxiliaires 3. Les auxiliaires 3 sont alimentés, soit directement par la source d'énergie 1, soit par l'unité de stockage 2, soit par l'énergie récupérée par le moteur électrique 4.

Pour gérer la distribution et la gestion de l'énergie, un superviseur 5, par exemple un calculateur, est relié à la source d'énergie 1, à l'unité de stockage 2, aux auxiliaires 3 et au moteur de traction 4. Le superviseur 5 est relié à un système de guidage 6, prenant en compte les informations relatives au véhicule, au parcours du véhicule et à sa localisation. Ainsi, à chaque instant, la demande de puissance du véhicule est modifiée par la commande du fonctionnement des auxiliaires 3 par le superviseur 5.

En agissant sur le profil de la demande en puissance dans le temps, le rendement énergétique du véhicule et notamment de la source d'énergie 1 est optimisé sur la totalité du parcours. Le fonctionnement des auxiliaires 3 et de la source d'énergie 1 est commandé le long du parcours, de manière prédictive, suivant les informations relatives au véhicule telles que la vitesse, les informations relatives au parcours (angle de descente ou de montée, distance), et à la localisation de véhicule par le système de navigation 6 pour pouvoir prédire un freinage, une accélération ou un arrêt.

A cet effet, le superviseur 5 du véhicule reçoit des signaux relatifs à l'état de fonctionnement de la source d'énergie 1, par exemple le courant et la tension de sortie d'un alternateur ainsi que la vitesse de rotation de l'arbre de l'alternateur, soit mesuré directement par un capteur dédié à cette fonction, soit calculé à partir de la tension et du courant. Le superviseur 5 reçoit également des signaux relatifs à la consommation d'énergie par les auxiliaires, des signaux relatifs à la quantité d'énergie stockée dans l'unité de stockage 2, par exemple la tension et le courant de sortie de l'unité de stockage 2 et des signaux relatifs au moteur de traction 4, notamment la tension et le courant.

Le système de navigation 6 comprendra en général une mémoire dans laquelle est stocké un modèle du parcours du véhicule, modèle qui sera très précis dans le cas d'un véhicule effectuant de façon répétitive un circuit de quelques kilomètres ou quelques dizaines de kilomètres, modèle à échantillonnage plus large dans le cas où le parcours du véhicule est plus aléatoire et où il convient de stocker de nombreux itinéraires possibles.

Le système de navigation 6 peut comprendre une ou plusieurs caméras, non représentées, aptes à repérer le long du trajet du véhicule des marquages optiques qui pourront, à titre d'exemple, être disposés à un arrêt d'autobus ou d'autocar ou quelques dizaines de mètres avant un tel arrêt sur tout type de mobilier urbain susceptible de le supporter ou directement sur la chaussée. La caméra fournira une image au système de guidage 6 qui procèdera à l'analyse de ladite image pour permettre le repérage du marquage.

A titre de variante, on peut également envisager un système de navigation 6 équipé de moyens de communication hyper-fréquence aptes à émettre et à recevoir des signaux hyper-fréquence avec des bornes hyper-fréquence stationnaires disposées le long du trajet du véhicule. Les bornes hyper-fréquence peuvent être du type actif ou passif.

De façon plus générale, on équipe un trajet de véhicule d'une pluralité de marquages, optiques, hyper-fréquence ou autres, dans lequel chaque élément de marquage permet au véhicule de connaître sa localisation géographique et d'en déduire les caractéristiques futures proches du parcours grâce au profil de parcours stocké en mémoire. Ainsi, le système de navigation 6 envoie au superviseur 5 un signal relatif à une prédiction de parcours effectuée sur une durée relativement courte ou sur une distance relativement courte par rapport à l'instant ou à la position courante du véhicule.

En d'autres termes, le système de navigation 6 indique au superviseur 5 si le véhicule va rencontrer très prochainement une montée, une descente ou un plat. Dans le cas d'un trajet comportant de nombreux arrêts répétitifs, par exemple un trajet d'autobus ou d'autocar, le système de navigation 6 peut indiquer au superviseur 5 que le véhicule aura à effectuer dans le parcours futur proche une accélération, un maintien de vitesse constante, un freinage ou encore un arrêt.

En option, le système de navigation 6 peut être relié à un radar anti-collision lui indiquant la distance entre ledit véhicule et un autre véhicule situé immédiatement devant, ce qui permet d'en déduire un freinage futur si la distance entre les deux véhicules est faible, ou en diminution et ce bien entendu en fonction de la vitesse du véhicule et une accélération future si ladite distance est importante ou s'accroît.

Le système de navigation 6 peut également être relié par des moyens de télécommunication à un système de gestion centralisé de trafic apte à indiquer audit système de navigation 6 des informations relatives à la densité du trafic telles qu'une vitesse moyenne probable et/ou une vitesse maximale probable.

Le véhicule peut également être équipé d'un moyen de communication, non représenté, avec un système de positionnement global par satellite. Ledit moyen de communication enverra au système de navigation 6 un signal relatif à la localisation géographique dudit véhicule avec une précision de l'ordre de quelques mètres, voire moins.

Un tel système, présenté ci-dessus, permet pour un exploitant de réseau d'autobus de connaître la position exacte des véhicules sur le réseau et d'annoncer avec précision l'arrivée des autobus aux passagers.

Enfin, dans le cas d'un véhicule effectuant un trajet répétitif sur courte distance mais éventuellement aussi sur longue distance, on peut prévoir que les systèmes de navigation soient aptes à effectuer un auto-apprentissage du parcours par mémorisation de données relatives au profil du parcours et au profil de conduite (freinage, accélération, maintien de la vitesse). Cet apprentissage est effectué de façon progressive de façon que le système de navigation affine sa connaissance dudit parcours. Une fois que le système de navigation 6 a effectué un apprentissage d'un parcours, il est possible de transférer un fichier relatif audit apprentissage à un autre véhicule devant effectuer le même parcours. Ceci est intéressant dans le cas d'une flotte de véhicules effectuant tous le même parcours. Les moyens d'apprentissage sont alors prévus sur un seul des véhicules. Les autres véhicules profitent de l'apprentissage par transfert du fichier correspondant. Ce transfert peut également être intéressant dans le cas d'un parcours effectué par un seul véhicule, en cas de changement dudit véhicule.

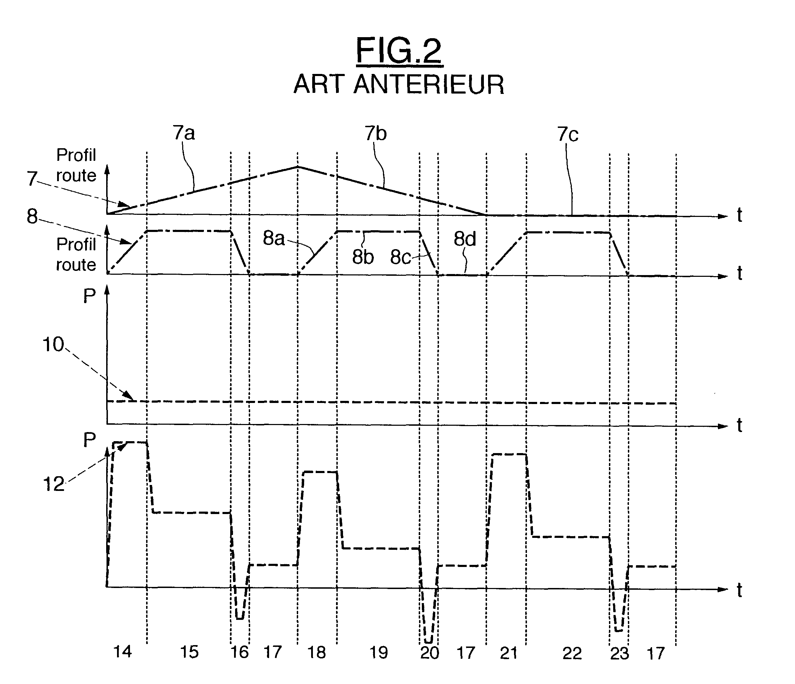

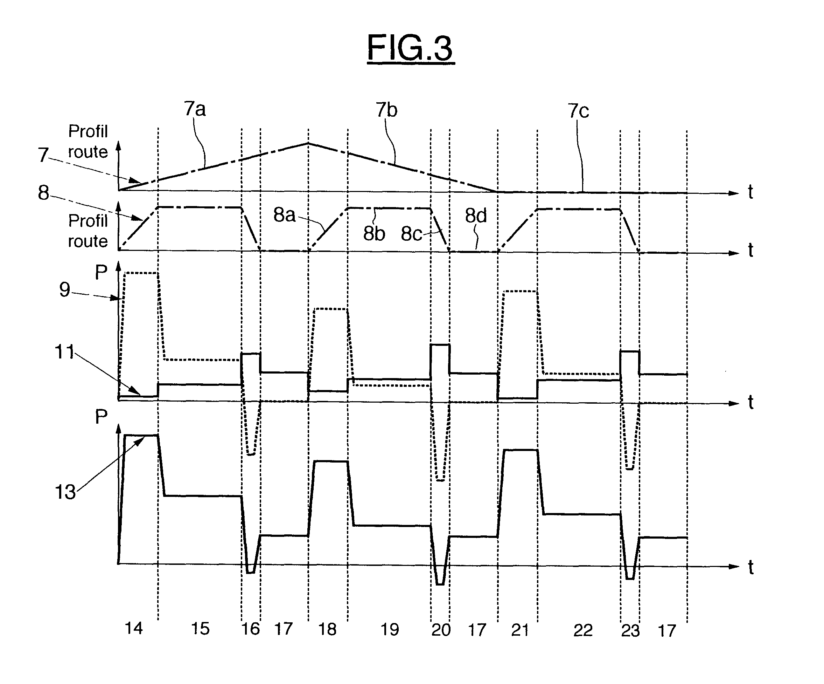

Sur les figures 2 et 3, sont illustrées des courbes relatives au profil géographique du parcours, au profil de vitesse et à la puissance. La courbe 7 est relative au profil de la route et comprend une zone de montée 7a, une zone de descente 7b, et une zone plate 7c. La courbe 8 est relative au profil de vitesse et présente une succession de zones d'accélération 8a, de maintien de la vitesse constante 8b, de décélération 8c et d'arrêt 8d.

La courbe 9 représente la puissance demandée par le moteur de traction 4. La courbe 10 représente la puissance demandée par les auxiliaires 3 selon l'art antérieur. La courbe 11 représente la puissance demandée par les auxiliaires 3 avec le système de gestion conforme à l'invention. La courbe 12 représente la demande globale de puissance du véhicule, selon l'art antérieur. La courbe 13 représente la demande globale de puissance du véhicule équipée du système de gestion conforme à l'invention.

A partir des courbes 7 et 8, on peut caractériser des zones particulières de fonctionnement référencées 14 à 23.

La zone 14 correspond à une accélération en côte. On se situe dans une portion 7a de la courbe 7 et dans une portion 8a de la courbe 8. On limite alors fortement la puissance demandée par les auxiliaires 3. La courbe 11 se situe à un niveau proche de zéro et très nettement inférieure à la portion correspondante de la courbe 10, laquelle est une droite de pente nulle. En d'autres termes, dans l'art antérieur, la consommation des auxiliaires était constante. Selon l'invention, le fonctionnement des auxiliaires est réduit lorsqu'on prévoit une zone 14.

La zone 15 correspond à une vitesse constante en montée. On se situe sur une portion 7a de la courbe 7 et sur une portion 8b de la courbe 8. Les auxiliaires 3 sont utilisés uniquement à des niveaux réduits, toutefois moins que pour la zone 14.

La zone 16 correspond à un freinage en montée, cas auquel de l'énergie est récupérée par le moteur de traction 4 et consommée par les auxiliaires 3. On se situe sur une portion 7a de la courbe 7 et une portion 8c de la courbe 8.

La zone 17 correspond à un arrêt. On se situe sur une portion 8d de la courbe 8. La courbe 7 n'a, lors d'une telle phase, pas de signification particulière. La puissance consommée par les auxiliaires 3 n'est alors pas limitée par le système de gestion conforme à l'invention.

La zone 18 correspond à une accélération en descente. On se situe sur une portion 7b de la courbe 7 et une portion 8a de la courbe 8. On se trouve dans la même situation que dans la zone 14, mais la consommation du moteur de traction 4 est plus faible et donc la consommation des auxiliaires 3 peut être autorisée à un niveau légèrement plus élevé. En d'autres termes, dans la zone 18, la courbe 11 se situe à un niveau légèrement plus élevé que dans la zone 14.

La zone 19 correspond à une vitesse constante en descente. On se situe sur la portion 7b de la courbe 7 et sur la portion 8b de la courbe 8. On se trouve dans une situation proche de celle de la zone 15, mais le niveau de fonctionnement des auxiliaires 3 peut être supérieur car la consommation d'énergie par le moteur de traction 4 est inférieure.

La zone 20 correspond à un freinage en descente, ce qui est le cas le plus favorable à la récupération de l'énergie. Le moteur de traction 4 fonctionne en freinage et récupère donc de l'énergie électrique. La consommation des auxiliaires 3 est alors autorisée à un niveau élevé. La courbe 11 se situe à un niveau supérieur à celui qu'elle présentait pour la zone 16 de freinage en montée.

Après la zone 20, le véhicule est de nouveau à l'arrêt. Puis, le véhicule se trouve dans la zone 21 d'accélération en zone plate. On se situe sur les portions 7c de la courbe 7 et 8a de la courbe 8. Le fonctionnement est proche de celui des zones 14 et 18, mais la consommation des auxiliaires 3 se situe entre celle desdites zones 14 et 18.

La zone 22 correspond à une vitesse constante à plat. On se situe sur la portion 7c de la courbe 7 et sur la portion 8b de la courbe 8. On peut alors alimenter les auxiliaires 3 de façon convenable tout en assurant la vitesse d'avancement souhaitée du véhicule.

La zone 23 correspond à un freinage à plat. On se situe sur une portion 7c de la courbe 7 et une portion 8c de la courbe 8. De l'énergie électrique est récupérée par le moteur de traction 4. La consommation des auxiliaires 3 est autorisée à un niveau élevé, ce qui n'est alors nullement pénalisant pour la consommation de carburant et pour le rendement de la chaîne de traction, en particulier en cas d'utilisation d'un moteur thermique ou d'une turbine à gaz.

Comme on le remarque en comparant les courbes 13 et 12, le système de gestion d'énergie conforme à l'invention permet d'obtenir un profil de demande en puissance du véhicule dont les extremums se situent à des niveaux plus faibles. On permet donc au moteur thermique de fonctionner à de meilleurs points de fonctionnement et donc de réduire la consommation. La prestation ou la sensation de confort apportée par les auxiliaires 3 reste assurée, car le système de gestion profite de leurs inerties respectives. En cas de forte demande, par exemple d'accélération en montée, les performances du véhicules peuvent être améliorées, car la puissance disponible pour le moteur de traction 4 est supérieure à celle d'un véhicule selon l'art antérieur.

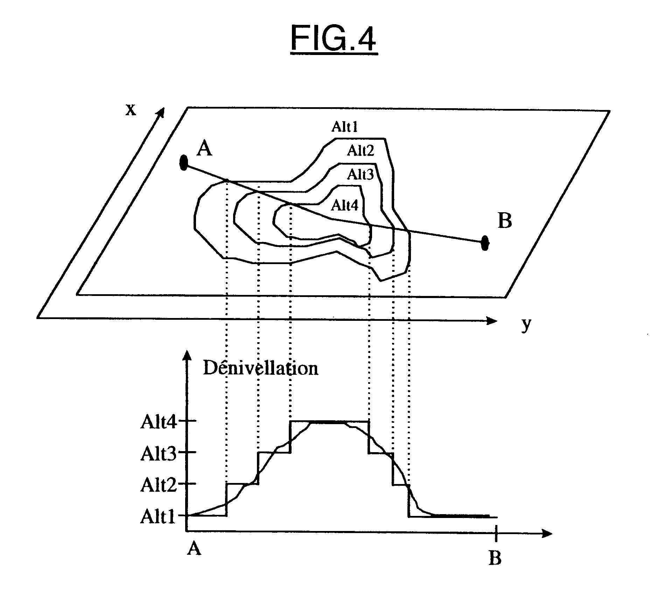

Sur la figure 4, est illustré un exemple de modélisation du relief qui est bien adapté au cas des véhicules effectuant des parcours variés. Le système de navigation 6 reçoit des données fournies par un système de positionnement global par satellite et les corrèle à une cartographie du relief stockée dans une mémoire. On peut ainsi déterminer la route empruntée par le véhicule, sa direction en différenciant deux positions successives, ainsi que l'inclinaison de la route. Les paramètres du véhicule (vitesse, accélération, freinage, ...) sont pris en compte ainsi que les informations concernant les niveaux de réserve des auxiliaires et les prestations qu'ils doivent fournir. Les lois de commande des auxiliaires 3 sont déterminées en fonction de la vitesse du véhicule, de l'accélération maximale positive, de l'accélération maximale négative ou freinage maximal, des coordonnées géographiques du véhicule, de la direction du véhicule, de la distance à parcourir et des niveaux de réserve des auxiliaires 3. De plus, des zones délimitées sur la cartographie de relief permettent de déterminer si le véhicule circule dans une zone urbaine, périurbaine ou routière. Ceci permet d'utiliser une loi de commande des auxiliaires 3 adaptée à chacune des trois zones.

Le superviseur 5 assure une fonction d'analyse du parcours et/ou de la localisation, une fonction d'estimation d'une demande future de puissance, et une fonction de commande des auxiliaires.

Grâce à l'invention, on pilote le fonctionnement des auxiliaires sur un parcours tout en assurant une prestation relativement constante en jouant sur le niveau de leur réserve d'énergie. On contrôle le fonctionnement des auxiliaires pour optimiser leur fonctionnement sur un parcours, et ce de manière prédictive grâce à la connaissance du parcours et de la localisation du véhicule. On réalise la commande du fonctionnement des auxiliaires afin d'optimiser le rendement global énergétique au cours du temps afin de minimiser le coût énergétique. On parvient ainsi à réduire la consommation et les émissions gazeuses du véhicule sur un parcours, à ne pas dégrader le confort de conduite et les performances du véhicule, à dimensionner au plus juste la source d'énergie par rapport à un besoin moyen en énergie du véhicule sur un parcours et non par rapport à un besoin maximum, et à augmenter l'agrément de conduite.

## Revendications

1. Dispositif de gestion d'énergie pour véhicule, comprenant au moins une source d'énergie électrique (1), au moins un moteur électrique de traction (4), des organes auxiliaires (3) consommateurs d'énergie électrique, et un superviseur de gestion d'énergie (5), caractérisé par le fait que le superviseur (5) comprend un moyen pour recevoir et analyser un signal relatif au parcours et/ou à la localisation du véhicule, ledit signal étant émis par un système (6) de navigation et de guidage du véhicule, un moyen d'estimation d'une demande future de puissance du moteur électrique de traction, et un moyen pour émettre un signal de commande des organes auxiliaires en fonction de l'estimation de la demande future de façon que la consommation d'énergie en provenance de la source d'énergie électrique soit réduite.

2. Dispositif selon la revendication 1, caractérisé par le fait qu'il comprend une unité de stockage d'énergie électrique (2).

3. Dispositif selon la revendication 1 ou 2, caractérisé par le fait que le moteur électrique de traction (4) comprend un moyen pour récupérer de l'énergie lors d'un freinage.

4. Dispositif selon l'une quelconque des revendications précédentes, caractérisé par le fait que le signal de commande est apte à piloter les organes auxiliaires (3).

5. Dispositif selon l'une quelconque des revendications précédentes, caractérisé par le fait que le système de navigation et de guidage est apte à localiser le véhicule.

6. Dispositif selon l'une quelconque des revendications précédentes, caractérisé par le fait qu'il comprend une mémoire de stockage de données relatives au parcours du véhicule et de données relatives au véhicule.

7. Dispositif selon l'une quelconque des revendications précédentes, caractérisé par le fait qu'il comprend un moteur à combustion interne ou externe, ou une pile à combustible.

8. Dispositif selon l'une quelconque des revendications précédentes, caractérisé par le fait qu'il comprend une caméra reliée au superviseur pour fournir audit superviseur des données relatives au parcours et/ou à la localisation du véhicule.

9. Dispositif selon l'une quelconque des revendications précédentes, caractérisé par le fait qu'il comprend un système de positionnement global apte à communiquer avec des stations de positionnement.

10. Véhicule comprenant un dispositif selon l'une quelconque des revendications précédentes.
